# EUROPEAN PATENT SPECIFICATION

(11) **EP 3 254 849 B1**
(45) Date of publication and mention of the grant of the patent: **03.07.2019**
(21) Application number: 16746265.4
(22) Date of filing: 14.01.2016
(51) Int. Cl.: B32B 27/30, B32B 27/40, F16C 13/00, G03G 15/00, B32B 25/04, B32B 27/08

(54) **LAMINATE AND ELECTROCONDUCTIVE ROLLER**
LAMINAT UND ELEKTRISCH LEITENDE WALZE
STRATIFIÉ ET ROULEAU ÉLECTRO-CONDUCTEUR

(30) Priority: 05.02.2015 JP 2015021640
(43) Date of publication of application: 13.12.2017
(73) Proprietor: Bridgestone Corporation, Tokyo 104-8340 (JP)
(72) Inventor: SANO, Takehiro, Tokyo 104-8340 (JP)
(74) Representative: Oxley, Robin John George
(86) International application number: PCT/JP2016/000165
(87) International publication number: WO 2016/125431

(56) References cited:
- EP-A1- 0 982 335
- JP-A- 2006 023 727
- JP-A- 2008 146 040
- JP-A- 2008 239 833
- US-A1- 2014 242 297
- DATABASE WPI Week 200830 Thomson Scientific, London, GB; AN 2008-E37247 XP002776732, & JP 2007 310230 A (TOKAI RUBBER IND LTD) 29 November 2007 (2007-11-29)

## Description

### TECHNICAL FIELD

This disclosure relates to a laminate and a conductive roller.

### BACKGROUND

Conventionally, known is a technique of disposing a UV curable resin on a substrate layer as a surface in a conductive roller having an elastic layer containing polyurethane, in order to suppress toner filming, etc. In the case of using a UV curable resin in the surface, there was a probability that when curing via ultraviolet ray irradiation, cure shrinkage is likely to occur in the surface, and thus a strain occurs between the substrate layer and the surface, leading to deterioration of the adhesiveness between layers.

In order to improve the adhesiveness between the layers, known is a technique of using a urethane acrylate oligomer with a weight average molecular weight of 6,000 or more and acryloylmorpholine in the surface (see, e.g., PTL1). In this way, in order to improve the adhesiveness between the substrate layer and the surface, specific materials were used in the surface.

PTL2 discloses a conductive roll which comprises a shaft, a base rubber layer on the shaft, an intermediate layer on the base rubber layer, and a surface layer on the intermediate layer, wherein the surface layer is formed using a resin composition containing a specific silicone graft acryl polymer and an isocyanate curing agent. PTL2 aims to provide a conductive roll having good smear resistance and toner filming resistance.

PTL3 discloses a conductive roll which comprises an outermost layer formed of a cured product of a UV-curable composition containing a UV-curable monomer and/or oligomer, wherein the outermost layer has minute recesses and projections formed on the surface. PTL3 aims to achieve superior toner transferability and discharge performance.

PTL4 discloses a conductive roll which comprises a shaft member, an elastic layer formed on the shaft member, a coating layer formed on the elastic layer, wherein the coating layer is formed using a specific UV cured resin. PTL4 aims to provide a conductive roll having improved durability.

PTL5 discloses a conductive roller which comprises a shaft, an elastic layer formed on the shaft, a specific first resin coating layer on the elastic layer, and a specific second resin coating layer, wherein at least one of the first and second resin coating layers contains an electron beam-cured resin. PTL5 aims to provide a conductive roller having good toner charging ability or photoconductor charging ability to improve image quality.

PTL6 discloses a conductive roll which comprises a layer formed of a UV-curable conductive composition which comprises specific photo-curable monomers and an initiator. PTL6 aims to provide a UV-curable conductive composition which can form a cured product having low hardness and resistance to permanent set by fatigue and excellent uniformity of electric resistance.

PTL7 discloses a method of making a multi-layer micro-wire structure includes providing a substrate having a surface and forming a plurality of micro-channels in the surface.

### CITATION LIST

### Patent Literature

PTL1 JP2008106840A
PTL2 EP0982335A
PTL3 JP2007310230A
PTL4 JP2008146040A
PTL5 JP2006023727A
PTL6 JP2008239833A
PTL7 US2014242297A

### SUMMARY

### (Technical Problem)

However, in the case of using an energy ray curable resin in the substrate layer and the surface, there was a probability that it is impossible to obtain more sufficient adhesiveness even by using an adhesive monomer such as the aforementioned acryloylmorpholine and the like. Then, this disclosure is to provide a laminate with improved adhesiveness between the layers, and a conductive roller having the laminate.

### (Solution to Problem)

The laminate of this disclosure is a laminate comprising a substrate layer and at least 2 or more energy ray curable resin layers formed by curing a resin composition with an energy ray, wherein: the laminate has an energy ray curable resin layer (1) which is formed on the substrate layer and an energy ray curable resin layer (2) which is formed on the energy ray curable resin layer (1); and a first resin composition used in formation of the energy ray curable resin layer (1) contains an energy ray curable resin (A) having a hydrocarbon ring skeleton which has one of the following structures:

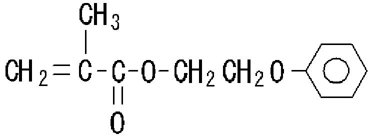

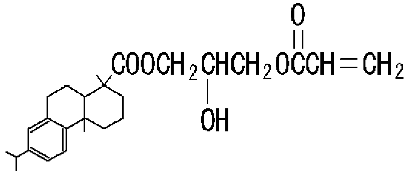

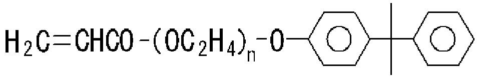

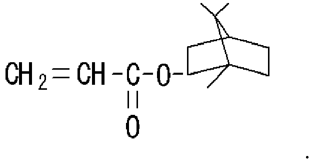

In the present Specification, the "energy ray" refers to ultraviolet ray, visible radiation, near infrared ray, infrared ray, far infrared ray, microwave, electron beam, β ray, γ ray, etc.

In the present Specification, the "energy ray curable resin (A) having a hydrocarbon ring skeleton" means that a hydrocarbon ring is incorporated in the molecule of the energy ray curable resin (A).

In the present Specification, the "surface" refers to a layer disposed on the "substrate (substrate layer)", and a layer disposed on the side opposite to the "substrate (substrate layer)".

### (Advantageous Effect)

According to this disclosure, it is possible to provide a laminate with improved adhesiveness between the layers, and a conductive roller having the laminate.

### BRIEF DESCRIPTION OF THE DRAWINGS

FIG. 1 illustrates a cross-sectional view of an embodiment of the laminate of this disclosure; and
FIG. 2 illustrates a cross-sectional view of an embodiment of the conductive roller of this disclosure.

### DETAILED DESCRIPTION

Hereinafter, this disclosure is exemplified in details based on an embodiment thereof.

Here, in the present Specification, "(meth)acryl" is a general term of acryl and methacryl, and "(meth)acrylate" is a general term of acrylate and methacrylate.

### (Laminate)

The laminate of this disclosure at least has an energy ray curable resin layer (1) and an energy ray curable resin layer (2), and further has other layers if necessary.

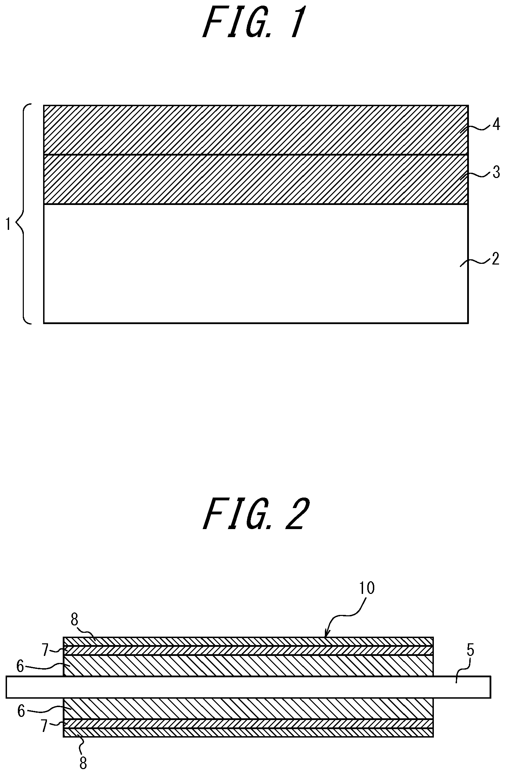

FIG. 1 illustrates a cross-sectional view of an embodiment of the laminate of this disclosure. The laminate 1 as illustrated in FIG. 1 includes: a substrate layer 2; a first energy ray curable resin layer 3 formed adjacent to the substrate layer 2; and a second energy ray curable resin layer 4 different from the first energy ray curable resin layer 3, which is formed adjacent to the first energy ray curable resin layer 3.

Here, the laminate 1 as illustrated in FIG. 1 has the first energy ray curable resin layer 3 and the second energy ray curable resin layer 4 on the substrate layer 2, but may have layers other than these two layers as well. The laminate 1 as illustrated in FIG. 1 has one substrate 2, but may have no substrate 2, or have two or more substrate layers 2.

### <Energy ray curable resin layer (1), energy ray curable resin layer (2)>

The aforementioned energy ray curable resin layers (1) and (2) are both layers formed by curing a resin composition containing an energy ray curable resin. Here, the energy ray curable resin layer (2) is formed on the energy ray curable resin layer (1).

The aforementioned energy ray curable resin layer (1) is a layer formed by curing a first resin composition mentioned below, which contains an energy ray curable resin (A) having a hydrocarbon ring skeleton, and the aforementioned energy ray curable resin layer (2) is a layer formed by curing a second resin composition mentioned below.

The thickness of the aforementioned energy ray curable resin layer (1) is not specifically limited, and may be appropriately selected depending on the purpose, but is preferably 0.2 to 20 µm, more preferably 0.5 to 10 µm. If the thickness is 0.2 µm or more, it is possible to improve the adhesiveness to the energy ray curable resin layer (2), and if 20 µm or less, there is a tendency that during film formation, defections in the appearance, such as creases, whitening and the like, are unlikely to occur on the coating film. Namely, by setting the thickness of the energy ray curable resin layer (1) within the aforementioned preferable range, the strain due to cure shrinkage is small, and it is possible to improve the adhesiveness to the energy ray curable resin layer (2).

The thickness of the aforementioned energy ray curable resin layer (2) is not specifically limited, and may be appropriately selected depending on the purpose, but is preferably 0.2 to 20 µm, more preferably 0.5 to 10 µm. If the thickness is 0.2 µm or more, it is possible to improve the adhesiveness to the energy ray curable resin layer (1), and if 20 µm or less, there is a tendency that during film formation, defections in the appearance, such as creases, whitening and the like, are unlikely to occur on the coating film. Namely, by setting the thickness of the energy ray curable resin layer (2) within the aforementioned preferable range, the strain due to cure shrinkage is small, and it is possible to improve the adhesiveness to the energy ray curable resin layer (1).

### <<First resin composition>>

The aforementioned first resin composition contains at least an energy ray curable resin (A), and contains polymer component, photo polymerization initiator, organic solvent and other components if necessary.

Here, a resin component is formed with the aforementioned energy ray curable resin (A) and the aforementioned polymer component.

### -Energy ray curable resin (A)-

The aforementioned energy ray curable resin (A) has a hydrocarbon ring skeleton in the molecule, which has one of the following structures: a methacrylate represented with the following structural formula (1), and an acrylate represented with any one among the following structural formula (2), the following general formula (1), and the following structural formula (3).

Here, it is preferable that the hydrocarbon ring skeleton is incorporated with a covalent bond in the molecule of the energy ray curable resin (A).

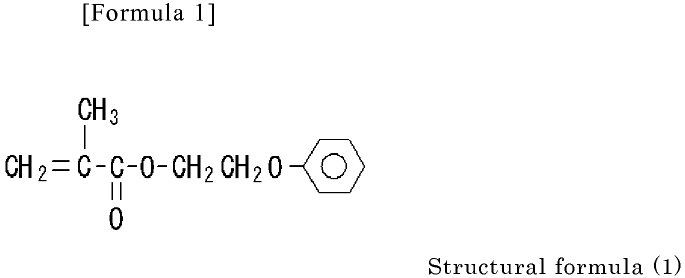

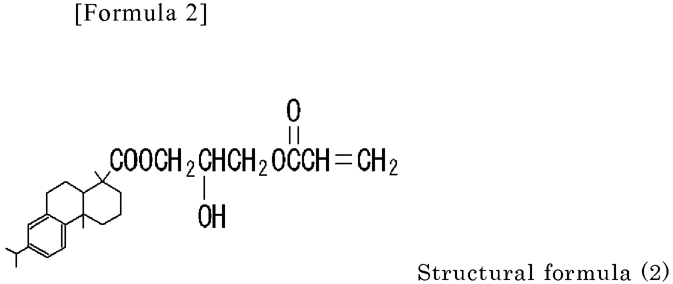

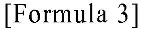

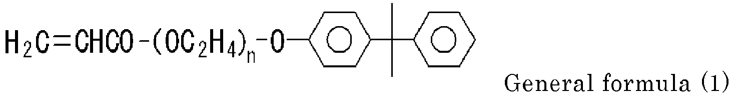

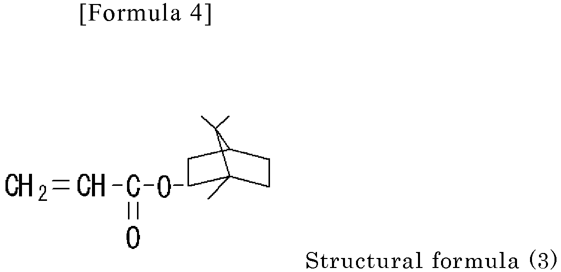

### -Content of energy ray curable resin (A) in first resin composition-

The content of the energy ray curable resin (A) in the aforementioned first resin composition is not specifically limited and may be appropriately selected depending on the purpose, but is preferably 15 to 80 parts by mass, more preferably 30 to 80 parts by mass per 100 parts by mass of the resin component.

If the aforementioned content is 15 to 80 parts by mass, it is possible to further improve the adhesiveness between the layers, and simultaneously maintain the softness. If the aforementioned content is within the more preferable range, it is beneficial from the viewpoint of the adhesiveness between the layers.

### -Polymer component-

The aforementioned polymer component (inclusive of the oligomer component) is not specifically limited and may be appropriately selected depending on the purpose, and is exemplified as urethane (meth)acrylate oligomer, ester based (meth)acrylate oligomer, polycarbonate based (meth)acrylate oligomer, etc.

The weight average molecular weight of the polymer (inclusive of the oligomer) in the polymer component (inclusive of the oligomer component) is not specifically limited and may be appropriately selected depending on the purpose, but 2000 to 20000 is preferable. If the weight average molecular weight is 2000 to 20000, it is beneficial from the viewpoint of softness.

### --Urethane (meth)acrylate oligomer--

The aforementioned urethane (meth)acrylate oligomer is not specifically limited and may be appropriately selected depending on the purpose, as long as an oligomer having one or more acryloyl groups (CH₂=CHCO- or CH₂=C(CH₃)CO-) and having one or more urethane bonds (-NHCOO-) in each molecule, and is exemplified as polybutadiene based urethane (meth)acrylate oligomer, carbonate based urethane (meth)acrylate oligomer, ester based urethane (meth)acrylate oligomer, ether based urethane (meth)acrylate oligomer, etc. These may be used singly or in a combination of two or more.

### --Ester based (meth)acrylate oligomer--

The aforementioned ester based (meth)acrylate oligomer is not specifically limited and may be appropriately selected depending on the purpose, as long as an oligomer having one or more ester bonds (-COO-) in each molecule, and is exemplified as compounds of which the main skeleton and an acrylate are bonded via an ester, through a reaction other than urethane reaction.

### --Polycarbonate based (meth)acrylate oligomer--

The aforementioned polycarbonate based (meth)acrylate oligomer is not specifically limited and may be appropriately selected depending on the purpose, as long as an oligomer having one or more carbonate groups (-O-(C=O)-O-) in each molecule.

### -Photo polymerization initiator-

By using the aforementioned photo polymerization initiator, it is possible to initiate the polymerization reaction with light.

The aforementioned photo polymerization initiator is not specifically limited and may be appropriately selected depending on the purpose, and is exemplified as 4-dimethylamino benzoic acid; 4-dimethylamino benzoate; 2,2-dimethoxy-2-phenylacetophenone; acetophenone diethyl ketal; alkoxyacetophenone; benzyl dimethyl ketal; benzophenone derivatives such as benzophenone, 3,3-dimethyl-4-methoxybenzophenone, 4,4-dimethoxybenzophenone, 4,4-diaminobenzophenone and the like; alkyl benzoylbenzoate; bis(4-dialkylaminophenyl)ketone; benzyl derivatives such as benzyl, benzyl methyl ketal and the like; benzoin derivatives such as benzoin, benzoin isobutyl ether, benzoin isopropyl ether and the like; 2-hydroxy-2-methylpropiophenone; 1-hydroxycyclohexyl phenyl keton; xanthone derivatives such as xanthone, thioxanthone and the like; fluorene; 2,4,6-trimethylbenzoyldiphenylphosphine oxide; bis(2,6-dimethoxybenzoyl)-2,4,4-trimethylpentylphosphine oxide; bis(2,4,6-trimethylbenzoyl)-phenylphosphine oxide; 2-methyl-1-(4-methylthiophenyl)-2-morpholinopropane-1-one (Irgacure.907); 2-benzyl-2-dimethylamino-1-(morpholinophenyl)-butanone-1, etc. These may be used singly or in a combination of two or more.

The compounding amount of the aforementioned photo polymerization initiator is not specifically limited and may be appropriately selected depending on the purpose, while 0.2 to 5 parts by mass per 100 parts by mass of the resin component is preferable.

If the aforementioned content is within the preferable range, it is beneficial from the viewpoint of prevention of curing failure.

### -Organic solvent-

By using the aforementioned organic solvent, it is possible to achieve adjustment of solid component concentration, improvement of dispersion stability, improvement of coating properties, improvement of adhesiveness to the substrate, etc.

The aforementioned organic solvent is not specifically limited and may be appropriately selected depending on the purpose, and is exemplified as solvents such as alcohols, ketones, ethers, esters, cellosolves, aromatic compounds and the like.

Specifically, the aforementioned organic solvent is not specifically limited and may be appropriately selected depending on the purpose, and is exemplified as methanol, ethanol, 1-propanol, 2-propanol, 1-butanol, 2-butanol, isobutyl alcohol, t-butyl alcohol, benzyl alcohol, 2-methoxyethanol, 2-ethoxyethanol, 2-(methoxymethoxy)ethanol, 2-butoxyethanol, furfuryl alcohol, tetrahydrofurfuryl alcohol, diethylene glycol, diethylene glycol monomethyl ether, diethylene glycol monoethyl ether, diethylene glycol monobutyl ether, 1-methoxy-2-propanol, 1-ethoxy-2-propanol, dipropylene glycol, dipropylene glycol monomethyl ether, dipropylene glycol monoethyl ether, tripropylene glycol monomethyl ether, diacetone alcohol, acetone, methyl ethyl ketone, 2-pentanone, 3-pentanone, 2-hexanone, methyl isobutyl ketone, 2-heptanone, 4-heptanone, diisobutyl ketone, cyclohexanone, methylcyclohexanone, acetophenone, diethyl ester, dipropyl ether, diisopropyl ether, dibutyl ether, dihexyl ether, anisole, phenetole, tetrahydrofuran, tetrahydropyran, 1,2-dimethoxyethane, 1,2-diethoxyethane, 1,2-dibutoxyethane, diethylene glycol dimethyl ether, diethylene glycol diethyl ether, diethylene glycol dibutyl ether, glycerin ether, methyl acetate, ethyl acetate, propyl acetate, isopropyl acetate, butyl acetate, isobutyl acetate, sec-butyl acetate, pentyl acetate, isopentyl acetate, 3-methoxybutyl acetate, 2-ethylbutyl acetate, 2-ethylhexyl acetate, methyl propionate, ethyl propionate, butyl propionate, γ-butyrolactone, 2-methoxyethyl acetate, 2-ethoxyethyl acetate, 2-butoxyethyl acetate, 2-phenoxyethyl acetate, diethylene glycol monoethyl ether acetate, diethylene glycol monobutyl ether acetate, benzene, toluene, xylene, propylene glycol monomethyl ether acetate, etc. These may be used singly or in a combination of two or more. Among these, butyl acetate and propylene glycol monomethyl ether acetate are beneficial from the viewpoint of environment and solubility.

### -Other components-

The other components contained in the aforementioned first resin composition if necessary are not specifically limited and may be appropriately selected depending on the purpose, and are exemplified as catalyst, foam stabilizer, microparticle, ionic conductive agent, filler, peptizing agent, foaming agent, plasticizer, softener, tackifier, antitack agent, separating agent, release agent, extending agent, colorant, crosslinking agent, vulcanizing agent, polymerization inhibitor, etc. These may be used singly or in a combination of two or more.

By curing the aforementioned first resin composition, the energy ray curable resin layer (1) is obtained. The method for forming films is not specifically limited and may be appropriately selected depending on the purpose, and is exemplified as conventionally known coating methods, such as curtain coating, printing and the like. Further, by radiating an energy ray on the coated first resin composition (e.g., coating film), it is possible to obtain the energy ray curable resin layer (1) (e.g., cured film).

The aforementioned energy ray for curing the first resin composition is not specifically limited and may be appropriately selected depending on the purpose, and is exemplified as ultraviolet ray, visible radiation, near infrared ray, infrared ray, far infrared ray, microwave, electron beam, β ray, γ ray and the like. These may be used singly or in a combination of two or more. Among these, ultraviolet ray and visible radiation are preferable from the viewpoint of higher polymerization rate by using in a combination with photosensitive radical polymerization initiator, and comparatively less deterioration in the substrate. Specific light source of the aforementioned energy ray is not specifically limited, and may be appropriately selected depending on the purpose, and is exemplified as low pressure mercury lamp, medium pressure mercury lamp, high pressure mercury lamp, extra-high pressure mercury lamp, fusion lamp, incandescent light bulb, xenon lamp, halogen lamp, carbon arc lamp, metal halide lamp, fluorescent lamp, tungsten lamp, gallium lamp, excimer laser, the sun, etc. It is preferable that the aforementioned energy ray is radiated at an irradiation energy such that an integrat²ed energy of a wavelength of 200 to 600 nm is 0.05 to 10 J/cm². The irradiation atmosphere of the energy ray may be air, or an inactive gas such as nitrogen, argon and the like.

### <<Second resin composition>>

The aforementioned second resin composition at least contains a resin component, and contains photo polymerization initiator, organic solvent and other components if necessary.

### -Resin component-

The aforementioned resin component is not specifically limited and may be appropriately selected depending on the purpose as long as an energy ray curable resin, and is exemplified as energy ray curable resin having fluorine atom, energy ray curable resin having silicon atom, oligomers such as urethane (meth)acrylate oligomer, ester based (meth)acrylate oligomer, polycarbonate based (meth)acrylate oligomer and the like; monomer; etc.

### --Energy ray curable resin having fluorine atom--

The aforementioned energy ray curable resin having fluorine atom is not specifically limited and may be appropriately selected depending on the purpose, and is exemplified as fluorine-containing UV reactive surface modifier ("Megafac RS-72-K", made by DIC Corporation, "CHEMINOX FAAC-6", made by Unimatec Co., Ltd., etc.), etc.

### --Energy ray curable resin having silicon atom--

The aforementioned energy ray curable resin having silicon atom is not specifically limited and may be appropriately selected depending on the purpose, and is exemplified as silicone compound having acryl groups on both terminals and side chains ("X-22-2457", made by Shin-Etsu Chemical Co., Ltd., "BYK3500", made by BYK Japan K.K., etc.), etc.

### --Urethane (meth)acrylate oligomer--

The urethane (meth)acrylate oligomer in the second resin composition is the same as the urethane (meth)acrylate oligomer in the first resin composition.

### --Ester based (meth)acrylate oligomer--

The ester based (meth)acrylate oligomer in the second resin composition is the same as the ester based (meth)acrylate oligomer in the first resin composition.

### --Polycarbonate based (meth)acrylate oligomer--

The polycarbonate based (meth)acrylate oligomer in the second resin composition is the same as the polycarbonate based (meth)acrylate oligomer in the first resin composition.

### --Monomer--

The monomer is not specifically limited and may be appropriately selected depending on the purpose, and is exemplified as (meth)acrylate or vinyl ether having functional groups such as hydrocarbon, ester, carboxylic acid, hydroxyl group, amino group, heterocycle and the like; (meth)acrylate or vinyl ether having phosphorus atom, silicon atom, fluorine atom, bromine atom, chlorine atom, transition metal atom and the like, etc.

### -Photo polymerization initiator-

The photo polymerization initiator in the second resin composition is the same as the photo polymerization initiator in the first resin composition.

The compounding amount of the photo polymerization initiator is not specifically limited and may be appropriately selected depending on the purpose, while 0.2 to 5 parts by mass per 100 parts by mass of the polymer is preferable.

If the content is within the preferable range, it is beneficial from the viewpoint of prevention of curing failure.

### -Organic solvent-

The organic solvent in the second resin composition is the same as the organic solvent in the first resin composition.

The content in the organic solvent is not specifically limited, and may be appropriately selected depending on the purpose.

### -Other components-

The other components in the second resin composition are the same as the other components in the first resin composition.

By curing the aforementioned second resin composition, the energy ray curable resin layer (2) is obtained. The method for forming films is not specifically limited and may be appropriately selected depending on the purpose, and is exemplified as conventionally known coating methods, such as curtain coating, printing and the like. Further, by radiating an energy ray on the coated second resin composition (e.g., coating film), it is possible to obtain the energy ray curable resin layer (2) (e.g., cured film).

The aforementioned energy ray for curing the second resin composition is not specifically limited and may be appropriately selected depending on the purpose, and is exemplified as ultraviolet ray, visible radiation, near infrared ray, infrared ray, far infrared ray, microwave, electron beam, β ray, γ ray and the like. These may be used singly or in a combination of two or more. Among these, ultraviolet ray and visible radiation are preferable from the viewpoint of higher polymerization rate by using in a combination with photosensitive radical polymerization initiator, and comparatively less deterioration in the substrate. Specific light source of the aforementioned energy ray is not specifically limited, and may be appropriately selected depending on the purpose, and is exemplified as low pressure mercury lamp, medium pressure mercury lamp, high pressure mercury lamp, extra-high pressure mercury lamp, fusion lamp, incandescent light bulb, xenon lamp, halogen lamp, carbon arc lamp, metal halide lamp, fluorescent lamp, tungsten lamp, gallium lamp, excimer laser, the sun, etc. It is preferable that the aforementioned energy ray is radiated at an irradiation energy such that an integrated energy of a wavelength of 200 to 600 nm is 0.05 to 10 J/cm². The irradiation atmosphere of the energy ray may be air, or an inactive gas such as nitrogen, argon and the like.

### <Other layers>

The other layers of the laminate of this disclosure if necessary is not specifically limited and may be appropriately selected depending on the purpose, and is exemplified as substrate layer as a substrate, adhesive layer, reinforcement layer, buffer layer, etc. These may be used singly or in a combination of two or more.

### -Substrate layer-

The shape of the substrate layer is not specifically limited, and may be appropriately selected depending on the purpose.

The material of the substrate layer is not specifically limited and may be appropriately selected depending on the purpose, and is exemplified as energy ray curable resin, metal, ceramic, thermoplastic plastic, thermoplastic elastomer, thermosetting plastic, silicone, urethane resin, etc. These may be used singly or in a combination of two or more.

According to the laminate of this disclosure, it is possible to obtain a laminate with improved adhesiveness between the layers.

Here, the mechanism to obtain adhesiveness is unclear, but it is assumed that by forming the layers with a bulky material (the energy ray curable resin (A) having a hydrocarbon ring skeleton), recesses and protrusions are formed at molecular level, which obtains an anchor effect.

In the laminate of this disclosure, if the hydrocarbon ring skeleton has 6 or more carbon atoms, it is possible to further improve the adhesiveness between the layers.

In the laminate of this disclosure, if the energy ray curable resin layer (2) is an outermost layer, and the second resin composition used in formation of the energy ray curable resin layer (2) contains at least either one among an energy ray curable resin having fluorine atom and an energy ray curable resin having silicon atom, it is possible to relax external factors such as abrasion and the like.

In the laminate of this disclosure, if the first resin composition contains a resin component, and the content of the energy ray curable resin (A) in the first resin composition is 15 to 80 parts by mass per 100 parts by mass of the resin component, it is possible to further improve the adhesiveness between the layers, and to maintain the softness.

### <Method for producing laminate>

The production method for producing the laminate of this disclosure preferably includes at least a first coating process, a first layer formation process, a second coating process, and a second layer formation process, and contains other processes if necessary.

In an embodiment of the laminate of this disclosure, it is preferable that the energy ray curable resin layer (1) is substantively completely cured before film formation of the energy ray curable resin layer (2), while it is possible as well to form the energy ray curable resin layer (2) on the energy ray curable resin layer (1) which is at a half-cured state, and then simultaneously cure the energy ray curable resin layer (1) and the energy ray curable resin layer (2) by radiating an energy ray.

### <<First coating process>>

The aforementioned first coating process is a process for coating the first resin composition on the substrate.

The coating method is exemplified as dip coating, die coating, spin coating, bar coating, spray coating, roll coating, curtain coating, printing, etc. These may be used singly or in a combination of two or more.

### <<First layer formation process>>

The aforementioned first layer formation process is a process for curing the first resin composition coated on the substrate by radiating an energy ray, to form the energy ray curable resin layer (1).

The aforementioned energy ray is exemplified as ultraviolet ray, visible radiation, near infrared ray, infrared ray, far infrared ray, microwave, electron beam, β ray, γ ray, etc. These may be used singly or in a combination of two or more. Moreover, in the case of using a plurality of different energy rays, the irradiation may be performed simultaneously or in order.

Specific light source of the aforementioned energy ray is not specifically limited, and may be appropriately selected depending on the purpose, and is exemplified as low pressure mercury lamp, medium pressure mercury lamp, high pressure mercury lamp, extra-high pressure mercury lamp, incandescent light bulb, xenon lamp, halogen lamp, carbon arc lamp, metal halide lamp, fluorescent lamp, tungsten lamp, gallium lamp, excimer laser, the sun, etc.

The irradiation energy of the aforementioned energy ray is not specifically limited and may be appropriately selected depending on the purpose, but is preferably radiated such that an integrated energy of a wavelength of 200 to 600 nm is 0.05 to 10 J/cm².

The irradiation atmosphere of the energy ray is not specifically limited and may be appropriately selected depending on the purpose, and is exemplified as air, or an inactive gas such as nitrogen, argon and the like.

### <<Second coating process>>

The aforementioned second coating process is a process for coating the second resin composition on the cured energy ray curable resin layer (1).

The coating method is as mentioned above.

### <<Second layer formation process>>

The aforementioned second layer formation process is a process for curing the first resin composition coated on the energy ray curable resin layer (1) by radiating an energy ray, to form the energy ray curable resin layer (2).

The energy ray is as mentioned above.

### (Conductive roller)

The conductive roller of this disclosure has the laminate of this disclosure.

An embodiment of the conductive roller of this disclosure includes at least a shaft, and the aforementioned laminate formed on the shaft. The conductive roller of this disclosure may be produced with a well-known method.

FIG. 2 illustrates a cross-sectional view of an embodiment of the conductive roller of this disclosure. The conductive roller 10 as illustrated in FIG. 2 includes a shaft 5 installed in a manner held at both longitudinal end portions as an axis, and an elastic layer 6 (corresponding to the substrate layer 2 of the laminate in FIG. 1) disposed on a radial outer side of the shaft 5. Here, the conductive roller 10 as illustrated in FIG. 2 has one elastic layer 6, but may have two or more elastic layers as well. Moreover, the conductive roller 10 as illustrated in FIG. 2 has on a radial outer side of the elastic layer 6 an intermediate layer 7 (corresponding to the first energy ray curable resin layer 3 of the laminate in FIG. 1) and an outermost layer 8 (corresponding to the second energy ray curable resin layer 4 of the laminate in FIG. 1), but may have other layers other than these 2 layers.

The type of the conductive roller of this disclosure is not specifically limited and may be appropriately selected depending on the purpose, and is exemplified as charging roller, toner supply roller, developing roller, transfer roller, cleaning roller, fixing roller, etc.

Among these, charging roller and developing roller particularly demands adhesiveness to coating films, and thus the effect of this disclosure is necessary.

### <Shaft>

The aforementioned shaft is not specifically limited and may be appropriately selected depending on the purpose as long as having excellent conductivity, and is exemplified as metallic hollow cylinder, resin hollow cylinder, metallic solid cylinder, resin solid cylinder, etc.

### EXAMPLES

Hereinafter, this disclosure is further described in details by referring to examples, while this disclosure is not limited to the following examples, but may be performed by varying within the scope of the subject thereof.

The laminate was produced with the following method.

### (Examples 1 to 16 and Comparative Examples 1 to 8)

### <Preparation of first resin composition>

(i) Use a urethane acrylate oligomer (trade name: NX44-31, made by Asia Industry Co., Ltd.) or an ester based urethane acrylate oligomer synthesized with the following synthesis method 1 as the polymer component;
(ii) use a (meth)acrylate represented with any one of the following structural formulae (1) to (3) and the general formula (1) (n=1 in the general formula (1)) as the energy ray curable resin (A);
(iii) use a 2-methyl-1-(4-methylthiophenyl)-2-morpholinopropane-1-one (trade name: Irgacure.907, made by BASF) as the photo polymerization initiator; and
(iv) use an acrylamide represented with the following structural formula (4) or a (meth)acrylate represented with any one of the following structural formulae (5) to (8) as other components,
   to prepare the first resin composition at the compounding amount as shown in the following Tables 1 and 2.

### <<Synthesis method 1>>

First, a lactone based (aliphatic polyester) diol (molecular weight: 2000, trade name: Plaxel 220AL, made by Daicel Corporation), an isophorone diisocyanate (IPDI) (made by Evonik Corporation), and a propylene glycol monomethyl ether acetate (PMA) (made by Sankyo Chemical Co.,Ltd.) as a solvent were mixed with a planetary mixer at 70°C for 10 minutes. Then, a tin catalyst (trade name: U-100, made by Nitto Kasei Co., Ltd.) was added by 0.1 w% with respect to the diol, and mixed at 70°C. After certifying per one hour that the theoretical peak area of isocyanate has been approached in infrared absorption (IR) spectrum, a 2-hydroxyethyl alcohol (HOA)(trade name: Light Ester HOA, made by Kyoeisha Chemical Co., Ltd.) was added. Further, after certifying that the peak of isocyanate in infrared absorption (IR) spectrum has disappeared, the synthesis was terminated.

Here, an "isocyanate index", which is an index calculated with [number of isocyanate groups (-NCO) in isocyanate group containing compound]/[number of (-OH) groups in polyol], was 1.8.

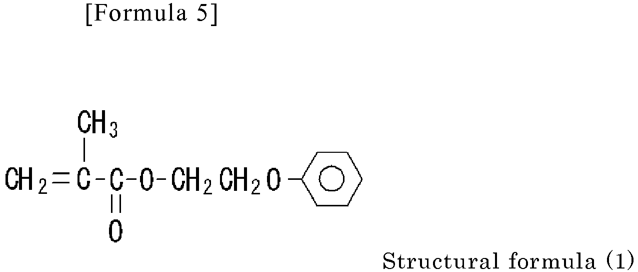

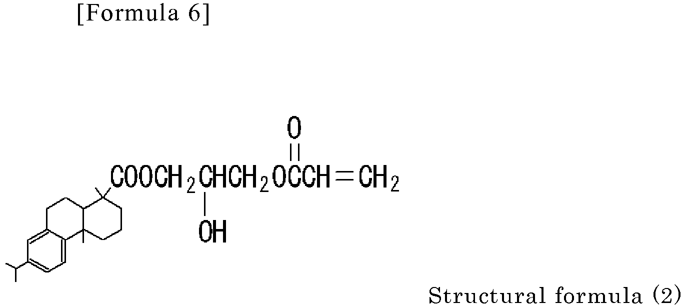

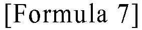

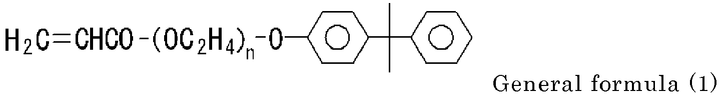

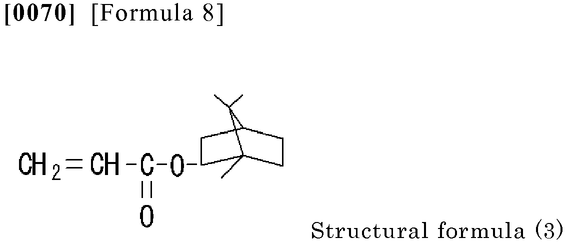

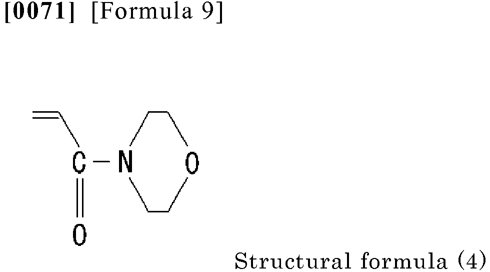

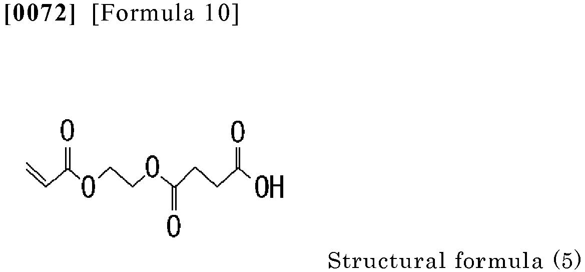

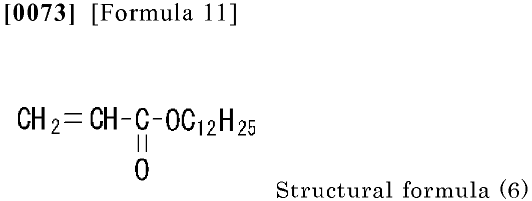

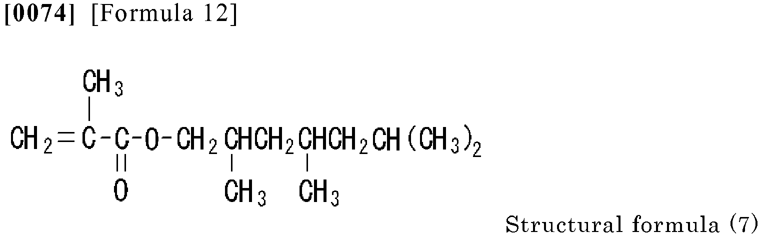

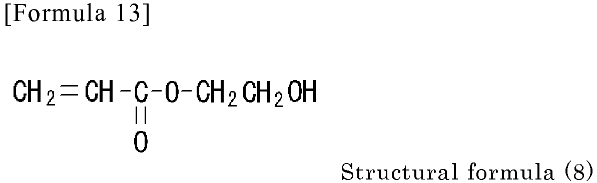

### <Preparation of second resin composition>

(i) Use as the resin component either one among: an ether based urethane acrylate oligomer synthesized with the following synthesis method 2, an ester based urethane acrylate oligomer synthesized with the aforementioned synthesis method 1, a polycarbonate based urethane acrylate oligomer (trade name: PX31-18, made by Asia Industry Co., Ltd.), a hydrogenated butadiene based urethane acrylate oligomer synthesized with the following synthesis method 3; an energy ray curable resin having silicon atom (silicone compound: trade name : X-22-2457, made by Shin-Etsu Chemical Co., Ltd.); and an energy ray curable resin having fluorine atom (trade name: Megafac 72K, made by DIC Corporation); and
(ii) use a 2-methyl-1-(4-methylthiophenyl)-2-morpholinopropane-1-one (trade name: Irgacure.907, made by BASF) as the photo polymerization initiator,
   to prepare the second resin composition at the compounding amount as shown in the following Tables 1 and 2.

### <<Synthesis method 2>>

First, a polypropylene glycol (PPG) based diol(trade name:P-2000, made by ADEKA Corporation), an isophorone diisocyanate (IPDI) (made by Evonik Corporation), and a propylene glycol monomethyl ether acetate (PMA) (made by Sankyo Chemical Co.,Ltd.) as a solvent were mixed with a planetary mixer at 70°C for 10 minutes. Then, a tin catalyst (trade name: U-100, made by Nitto Kasei Co., Ltd.) was added by 0.1 w% with respect to the diol, and mixed at 70°C. After certifying per one hour that the theoretical peak area of isocyanate has been approached in infrared absorption (IR) spectrum, a 2-hydroxyethyl alcohol (HOA)(trade name: Light Ester HOA, made by Kyoeisha Chemical Co., Ltd.) was added. Further, after certifying that the peak of isocyanate in infrared absorption (IR) spectrum has disappeared, the synthesis was terminated.

Here, an "isocyanate index", which is an index calculated with [number of isocyanate groups (-NCO) in isocyanate group containing compound]/[number of (-OH) groups in polyol], was 1.8.

### <<Synthesis method 3>>

First, a butadiene based diol (trade name: GI-2000, made by Nippon Soda Co., Ltd.), a toluene diisocyanate (TDI) (trade name: T-80, made by BASF INOAC Polyurethanes Ltd.), and a propylene glycol monomethyl ether acetate (PMA) (made by Sankyo Chemical Co.,Ltd.) as a solvent were mixed with a planetary mixer at 70°C for 10 minutes. Then, a tin catalyst (trade name: U-100, made by Nitto Kasei Co., Ltd.) was added by 0.1 w% with respect to the diol, and mixed at 70°C. After certifying per one hour that the theoretical peak area of isocyanate has been approached in infrared absorption (IR) spectrum, a 2-hydroxyethyl alcohol (HOA)(trade name: Light Ester HOA, made by Kyoeisha Chemical Co., Ltd.) was added. Further, after certifying that the peak of isocyanate in infrared absorption (IR) spectrum has disappeared, the synthesis was terminated.

Here, an "isocyanate index", which is an index calculated with [number of isocyanate groups (-NCO) in isocyanate group containing compound]/[number of (-OH) groups in polyol], was 1.8.

### <Formation of laminate>

In Examples 1 to 16 and Comparative Examples 1 to 8, the first resin composition was rendered to flow into a Teflon plate having a concavity with a depth of 0.5 mm. Then, a polyethylene terephthalate film (PET film) and a Pyrex® glass with a thickness of 5 mm were used to cover the upper portion of the first resin composition. Then, by radiating an ultraviolet ray by using a D valve of a 6-inch UV lamp-conveyor system (made by FusionUV) to cure the first resin composition, the energy ray curable resin layer (1) was formed. Next, the formed energy ray curable resin layer (1) was placed on a Teflon® plate having a concavity with a depth of 0.5 mm, and the second resin composition was rendered to flow in. Then, a polyethylene terephthalate film (PET film) and a Pyrex glass with a thickness of 5 mm were used to cover the upper portion of the second resin composition. Then, by radiating an ultraviolet ray by using a D valve of a 6-inch UV lamp-conveyor system (made by FusionUV) to cure the second resin composition, the energy ray curable resin layer (2) was formed, to obtain a laminate. Here, the conveyor speed was 2 cm/sec. Moreover, the peak power of the radiated ultraviolet ray (365 nm) was 1584 mW/cm, and the integral of light was 1086 mJ/cm².

The adhesiveness of the obtained laminate between the energy ray curable resin layer (1) and the energy ray curable resin layer (2) was evaluated with the following adhesiveness test. The result was as shown in Tables 1 and 2.

### <Adhesiveness test>

A 180° peel test was performed according to JIS C 6471. Here, the peeling rate was 50 mm/min. The "peeling force" is preferably 2 (N/cm) or more.

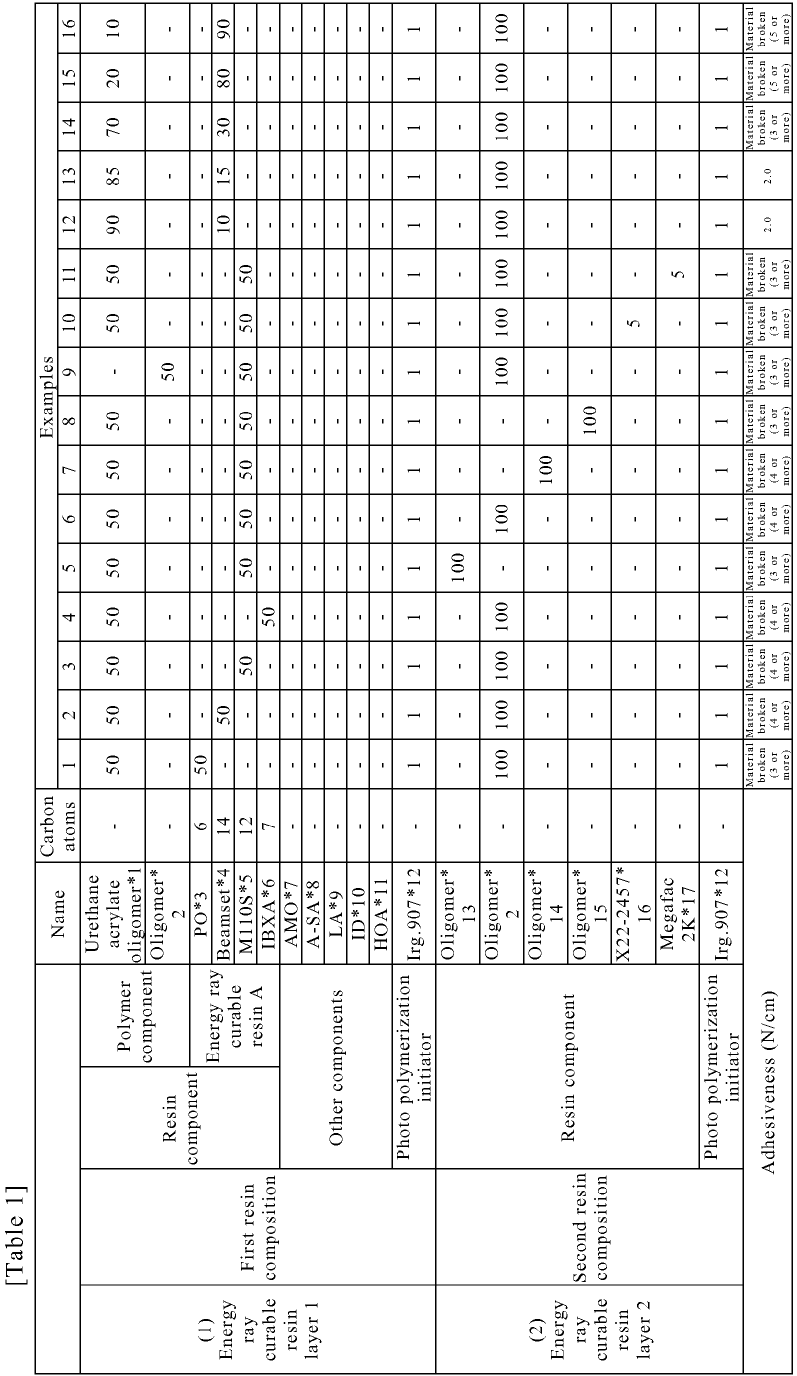

**[Table 2]**

| | | | | Name | Carbon atoms | Comparative examples | | | | | | | |
|---|---|---|---|---|---|---|---|---|---|---|---|---|---|
| | | | | | | 1 | 2 | 3 | 4 | 5 | 6 | 7 | 8 |
| (1) Energy ray curable resin layer 1 | First resin composition | Resin component | Polymer component | Urethane acrylate oligomer*1 | - | 50 | 50 | 50 | 50 | 50 | 50 | 50 | 50 |
| | | | | Oligomer*2 | - | - | - | - | - | - | - | - | - |
| | | | Energy ray curable resin A | PO*3 | 6 | - | - | - | - | - | - | - | - |
| | | | | Beamset*4 | 14 | - | - | - | - | - | - | - | - |
| | | | | M110S*5 | 12 | - | - | - | - | - | - | - | - |
| | | | | IBXA*6 | 7 | - | - | - | - | - | - | - | - |
| | | Other components | | AMO*7 | - | 50 | - | - | - | - | 50 | 50 | 50 |
| | | | | A-SA*8 | - | - | 50 | - | - | - | - | - | - |
| | | | | LA*9 | - | - | - | 50 | - | - | - | - | - |
| | | | | ID*10 | - | - | - | - | 50 | - | - | - | - |
| | | | | HOA* 11 | - | - | - | - | - | 50 | - | - | - |
| | | Photo polymerization initiator | | Irg.907*12 | - | 1 | 1 | 1 | 1 | 1 | 1 | 1 | 1 |
| (2) Energy ray curable resin layer 2 | Second resin composition | Resin component | | Oligomer* 13 | - | - | - | - | - | - | 100 | - | - |
| | | | | Oligomer*2 | - | 100 | 100 | 100 | 100 | 100 | - | - | - |
| | | | | Oligomer*14 | - | - | - | - | - | - | - | 100 | - |
| | | | | Oligomer* 15 | - | - | - | - | - | - | - | - | 100 |
| | | | | X22-2457*16 | - | - | - | - | - | - | - | - | - |
| | | | | Megafac 2K*17 | - | - | - | - | - | - | - | - | - |
| | | Photo polymerization initiator | | Irg.907*12 | - | 1 | 1 | 1 | 1 | 1 | 1 | 1 | 1 |
| Adhesiveness (N/cm) | | | | | | 0.9 | 0.2 | 0.5 | 0.5 | 0.1 | 0.1 | 0.8 | 0.2 |

| | | | | | | | | | | | | | |
|---|---|---|---|---|---|---|---|---|---|---|---|---|---|
| *1 to *17 in Tables 1 and 2 are as follows. *1: trade name: NX44-31, made by Asia Industry Co., Ltd. *2: an ester based urethane acrylate oligomer synthesized with the aforementioned synthesis method 1 *3: the aforementioned structural formula (1): trade name: Light Ester PO, made by Kyoeisha Chemical Co., Ltd. *4: the aforementioned structural formula (2): trade name: Beamset 101, made by Arakawa Chemical Industries, Ltd. *5: the aforementioned general formula (1): trade name: M110S, made by Toagosei Co., Ltd. *6: the aforementioned structural formula (3): trade name: Light Acrylate IBXA, made by Kyoeisha Chemical Co., Ltd. *7: the aforementioned structural formula (4): acryloyl morpholine, trade name: AMO, made by Shin-nakamura Chemical Co., Ltd. *8: the aforementioned structural formula (5): trade name: A-SA, made by Shin-nakamura Chemical Co., Ltd. *9: the aforementioned structural formula (6): trade name: Light Acrylate LA, made by Kyoeisha Chemical Co., Ltd. *10: the aforementioned structural formula (7): trade name: Light Ester ID, made by Kyoeisha Chemical Co., Ltd. *11: the aforementioned structural formula (8): trade name: Light Ester HOA, made by Kyoeisha Chemical Co., Ltd. *12: trade name: Irgacure.907, made by BASF *13: an ether based urethane acrylate oligomer synthesized with the aforementioned synthesis method 2 *14: polycarbonate based urethane acrylate oligomer (trade name: PX31-18, made by Asia Industry Co., Ltd.) *15: a hydrogenated butadiene based urethane acrylate oligomer synthesized with the aforementioned synthesis method 3 *16: silicone compound: trade name: X-22-2457, made by Shin-Etsu Chemical Co., Ltd. *17: UV reactive surface modifier: trade name: Megafac RS-72-K, made by DIC Corporation | | | | | | | | | | | | | |

According to Table 1 and Table 2, it is understood that as compared to Comparative Examples 1 to 8, which do not contain the energy ray curable resin (A) in which the first resin composition used in formation of the energy ray curable resin layer (1) has a hydrocarbon ring skeleton, Examples 1 to 16, which contain the energy ray curable resin (A) in which the first resin composition used in formation of the energy ray curable resin layer (1) has a hydrocarbon ring skeleton, have improved adhesiveness between the layers.

### INDUSTRIAL APPLICABILITY

The laminate of this disclosure is preferably used in, e.g., conductive rollers such as charging roller, toner supply roller, developing roller, transfer roller, cleaning roller, fixing roller and the like.

The conductive roller of this disclosure is preferably used as charging roller, toner supply roller, developing roller, transfer roller, cleaning roller, fixing roller, etc.

### REFERENCE SIGNS LIST

1 laminate
2 substrate layer
3 first energy ray curable resin layer
4 second energy ray curable resin layer
5 shaft
6 elastic layer
7 intermediate layer (energy ray curable resin layer (1))
8 outermost layer (energy ray curable resin layer (2))
10 conductive roller

## Claims

1. **A** laminate comprising a substrate layer and at least 2 or more energy ray curable resin layers formed by curing a resin composition with an energy ray, wherein:
the laminate has an energy ray curable resin layer (1) which is formed on the substrate layer and an energy ray curable resin layer (2) which is formed on the energy ray curable resin layer (1); and
a first resin composition used in formation of the energy ray curable resin layer (1) contains an energy ray curable resin (A) having a hydrocarbon ring skeleton which has one of the following structures:

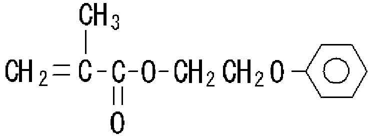

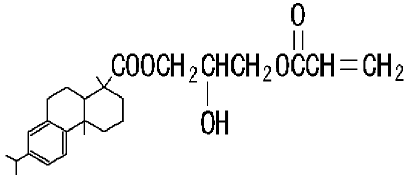

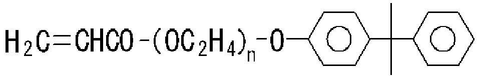

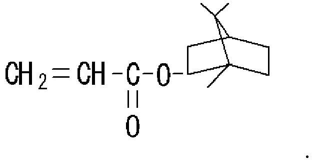

2. The laminate according to claim 1, wherein:
the energy ray curable resin layer (2) is an outermost layer; and
the second resin composition used in formation of the energy ray curable resin layer (2) contains at least either one among an energy ray curable resin having fluorine atom and an energy ray curable resin having silicon atom.

3. The laminate according to claim 1 or claim 2, wherein:
a content of the energy ray curable resin (A) in the first resin composition is 15 to 80 parts by mass per 100 parts by mass of a resin component in the first resin composition.

4. A conductive roller comprising the laminate according to any one of claims 1 to 3.

## Patentansprüche

1. Laminat, umfassend eine Substratschicht und mindestens 2 oder mehr durch Energiestrahlung härtbare Harzschichten, die durch Härten einer Harzzusammensetzung mit einem Energiestrahl gebildet werden, wobei:
das Laminat eine energiestrahlenhärtbare Harzschicht (1) aufweist, die auf der Substratschicht ausgebildet ist, und eine duch Energiestrahlung härtbare Harzschicht (2), die auf der durch Energiestrahlung härtbaren Harzschicht (1) ausgebildet ist; und
eine erste Harzzusammensetzung, die zur Bildung der durch Energiestrahlung härtbaren Harzschicht (1) verwendet wird, ein durch Energiestrahlung härtbares Harz (A) mit einem Kohlenwasserstoffringskelett enthält, das eine der folgenden Strukturen aufweist:

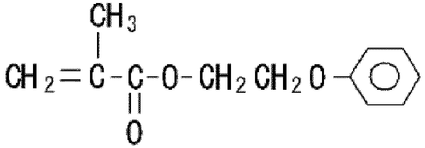

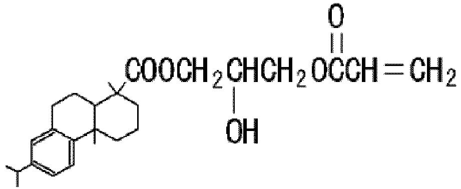

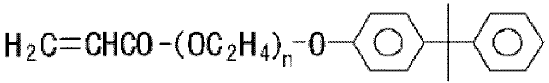

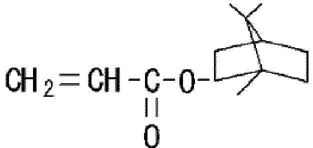

2. Laminat nach Anspruch 1, wobei:
die durch Energiestrahlung härtbare Harzschicht (2) eine äußerste Schicht ist; und
die zweite Harzzusammensetzung, die zur Bildung der durch Energiestrahlung härtbaren Harzschicht (2) verwendet wird, mindestens entweder ein unter einem durch Energiestrahlung härtbaren Harz mit Fluoratom oder ein durch Energiestrahlung härtbares Harz mit Siliziumatom enthält.

3. Laminat nach Anspruch 1 oder Anspruch 2, wobei:
ein Gehalt des durch Energiestrahlung härtbaren Harzes (A) in der ersten Harzzusammensetzung 15 bis 80 Massenteile pro 100 Massenteile einer Harzkomponente in der ersten Harzzusammensetzung beträgt.

4. Leitfähige Rolle, umfassend das Laminat nach einem der Ansprüche 1 bis 3.

## Revendications

1. Stratifié comprenant une couche de substrat et au moins deux ou plusieurs couches de résine durcissable par rayons d'énergie formées en durcissant une composition de résine avec un rayon d'énergie, dans lequel:
le stratifié comprend une couche de résine durcissable par rayons d'énergie (1) qui est formée sur la couche de substrat et une couche de résine durcissable par rayons d'énergie (2) qui est formée sur la couche de résine durcissable par rayons d'énergie (1); et
une première composition de résine utilisée dans la formation de la couche de résine durcissable par rayons d'énergie (1) contient une résine durcissable par rayons d'énergie (A) ayant un squelette cyclique d'hydrocarbure qui présente l'une des structures suivantes:

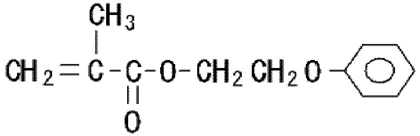

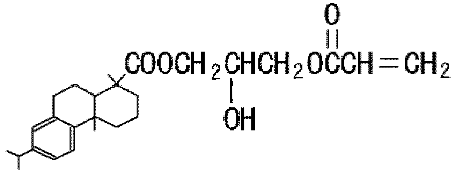

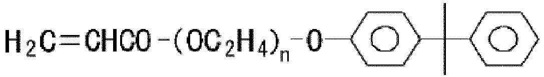

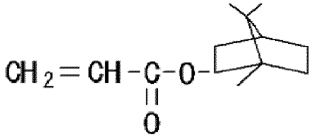

2. Stratifié selon la revendication 1, dans lequel:
la couche de résine durcissable par rayons d'énergie (2) est une couche la plus externe;
et
la deuxième composition de résine utilisée dans la formation de la couche de résine durcissable par rayons d'énergie (2) contient au moins l'une parmi une résine durcissable par rayons d'énergie ayant un atome de fluor et une résine durcissable par rayons d'énergie ayant un atome de silicium.

3. Stratifié selon la revendication 1 ou la revendication 2, dans lequel :
une teneur en résine durcissable par rayons d'énergie (A) dans la première composition de résine est de 15 à 80 parties en masse pour 100 parties en masse d'un composant de résine dans la première composition de résine.

4. Rouleau conducteur comprenant le stratifié selon l'une quelconque des revendications 1 à 3.
